# EUROPEAN PATENT SPECIFICATION

(11) **EP 3 225 425 B1**
(45) Date of publication and mention of the grant of the patent: **20.03.2019**
(21) Application number: 15863900.5
(22) Date of filing: 26.10.2015
(51) Int. Cl.: B60C 5/01, B60C 9/22, B60C 15/04

(54) **TIRE**
REIFEN
PNEU

(30) Priority: 26.11.2014 JP 2014239281
(43) Date of publication of application: 04.10.2017
(73) Proprietor: Bridgestone Corporation, Tokyo 104-8340 (JP)
(72) Inventor: KON, Seiji, Tokyo 104-8340 (JP); KOUNO, Yoshihide, Tokyo 104-8340 (JP)
(74) Representative: Oxley, Robin John George
(86) International application number: PCT/JP2015/080146
(87) International publication number: WO 2016/084536

(56) References cited:
- WO-A1-2013/089111
- WO-A1-2013/089111
- WO-A1-2014/175452
- WO-A1-2014/175453
- JP-A- 2006 282 102
- JP-A- 2010 053 495
- JP-A- 2011 042 235
- JP-A- 2013 180 652
- US-A- 4 754 794
- US-A- 5 127 456
- US-A1- 2012 152 428
- Henkel: "Design Guide for Bonding Plastics Volume 6 2011 Design Guide for Bonding Plastics", , 1 January 2011 (2011-01-01), pages 1-100, XP055375774, Retrieved from the Internet: URL:http://microfluidics.cnsi.ucsb.edu/pro cessing/237471_LT2197_Plastic_Guide_v6_LR7 911911.pdf [retrieved on 2017-05-24]

## Description

### Technical Field

The present invention relates to a tire, and in particular to a tire having a tire frame member formed using a resin material.

### Background Art

Recently there are demands to employ resin materials (for example, thermoplastic resins, thermoplastic elastomers, and the like) as tire materials from the perspectives of weight reduction and ease of molding, and due to their ease of recycling.

Japanese Patent Application Laid-Open (JP-A) No. H03-143701 describes a tire having a tire frame member formed with a thermoplastic resin material, Document US2012152428 A1 discloses a tire, on which the preamble of claim 1 is based.

### SUMMARY OF INVENTION

### Technical Problem

In the tire described in JP-A No. H03-143701, a rubber covered reinforcing cord is provided at the outer circumference of the tire frame member. Due to it not being easy to separate rubber from the reinforcing cord when recycling, technology for covering reinforcing cord with resin is being investigated from the perspective of ease of recycling.

In cases in which a reinforcing cord is covered in a covering-resin material, preferably the reinforcing cord and the covering-resin material are strongly adhered to each other by interposing an adhesive resin material between the two. Resin materials employed as the covering-resin material tend to be comparatively soft so as to be able to conform to tire deformation during tire roll. Although such soft resin material has excellent ability to conform to deformation, in cases in which damage has occurred there is a tendency for the spread of the damage to be difficult to suppress.

In consideration of the above circumstances, the present invention relates to providing a tire capable of suppressing the speed damage occurring in a covering-resin layer covering a reinforcing cord progresses as far as the reinforcing cord.

### Solution to Problem

A tire according to the present invention, which enables suppressing the speed damage occurring in the covering-resin layer progresses as far as the reinforcing cord is defined in claim 1. Said tire includes a circular tire frame member formed from a frame-resin material and a covered cord member. The covered cord member includes a reinforcing cord provided in the tire frame member and extending along a tire circumferential direction, a covering-resin layer formed from a covering-resin material, covering the reinforcing cord, and bonded to the tire frame member, and a bonding-resin layer. The bonding-resin layer is formed from a bonding-resin material having an elastic modulus higher than that of the covering-resin material, is interposed between the reinforcing cord and the covering-resin layer, bonds the reinforcing cord and the covering-resin layer together, and has a layer thickness thicker than that of the covering-resin layer, the layer thickness being the thickness of the thinnest portion measured along a radial direction of the reinforcing cord radiating out from the center of the reinforcing cord.

Due to the layer thickness of the bonding-resin layer being thicker than the layer thickness of the covering-resin layer, the bonding-resin layer is harder than, for example, in a configuration in which the layer thickness of the bonding-resin layer is the layer thickness of the covering-resin layer or less. Accordingly, even if damage occurs in the covering-resin layer, for example, the speed at which the damage progresses is suppressed by the bonding-resin layer. Thus, the speed damage occurring in the covering-resin layer progresses as far as the reinforcing cord is suppressed.

In the tire of the present invention the tire frame member includes a bead portion, a side portion continuing from a tire radial direction outer side of the bead portion, and a crown portion continuing from a tire width direction inner side of the side portion. The covered cord member is wound in a spiral shape around an outer circumference of the crown portion.

By means of this configuration the tire circumferential direction rigidity of the crown portion is raised due to the covered cord member being wound in a spiral shape around the outer circumference of the crown portion of the tire frame member. In the tire of the present invention the covered cord member as a cross-section profile along a tire width direction that is substantially square shaped and portions of the cord member adjacent to each other in the tire width direction are bonded to each other by thermal welding..

In a first preferred embodiment of the tire the covering-resin material has thermoplastic properties, and the covering-resin layer and the crown portion are bonded together by thermal welding.

In the tire of the first preferred embodiment the bond strength between the covering-resin layer and the crown portion is raised due to the covering-resin layer of the covered cord member being bonded to the crown portion of the tire frame member by thermal welding.

In a second preferred embodiment of the tire a layer thickness of the bonding-resin layer is from 500 µm to 5 mm.

In the tire according to the second preferred embodiment, the bonding-resin layer can be made even harder due to the layer thickness of the bonding-resin layer being from 500 µm to 5 mm. Thus, even if damage occurs in the covering-resin layer, for example, the speed at which the damage progresses is further suppressed by the bonding-resin layer.

### Advantageous Effects of Invention

As explained above, according to the tire of the present invention, the speed damage occurring in the covering-resin layer covering the reinforcing cord progresses as far as the reinforcing cord can be suppressed.

### BRIEF DESCRIPTION OF DRAWINGS

Fig. 1 is a cross-section taken along a tire width direction of a tire of a first exemplary embodiment of the present invention.
Fig. 2 is an enlarged perspective view illustrating a portion indicated by arrow 2 in the tire of Fig. 1.
Fig. 3 is a cross-section taken along the tire width direction of a bead portion of a tire of a second exemplary embodiment not being an embodiment of the present invention
Fig. 4 is a cross-section taken along the tire width direction of a covered cord member, illustrating a first modified example of a covered cord member of a tire of the first exemplary embodiment of the present invention.
Fig. 5 is a cross-section taken along the tire width direction of a covered cord member, illustrating a second modified example of a covered cord member of a tire of the first exemplary embodiment of the present invention.

### DESCRIPTION OF EMBODIMENTS

Explanation follows regarding embodiments of the present invention, giving exemplary embodiments thereof. In the drawings, arrows TW indicate a tire width direction, arrows TR indicate a tire radial direction (a direction orthogonal to a tire rotation axis (not illustrated in the drawings)), and arrows TC indicate a tire circumferential direction. In the following, the tire radial direction side that is nearer to the tire axis of rotation is referred to as the "tire radial direction inner side" and the tire radial direction side that is further from the tire axis of rotation is referred to as the "tire radial direction outer side". The tire width direction side that is nearer to a tire equatorial plane CL is referred to as the "tire width direction inner side", and the opposite sides thereto, namely the tire width direction sides that are further from the tire equatorial plane CL are referred to as "tire width direction outer sides".

Note that the method for measuring the dimensions of each part is based on the method listed in the Japan Automobile Tire Manufacturer's Association (JATMA) YEAR BOOK 2014.

### First Exemplary Embodiment

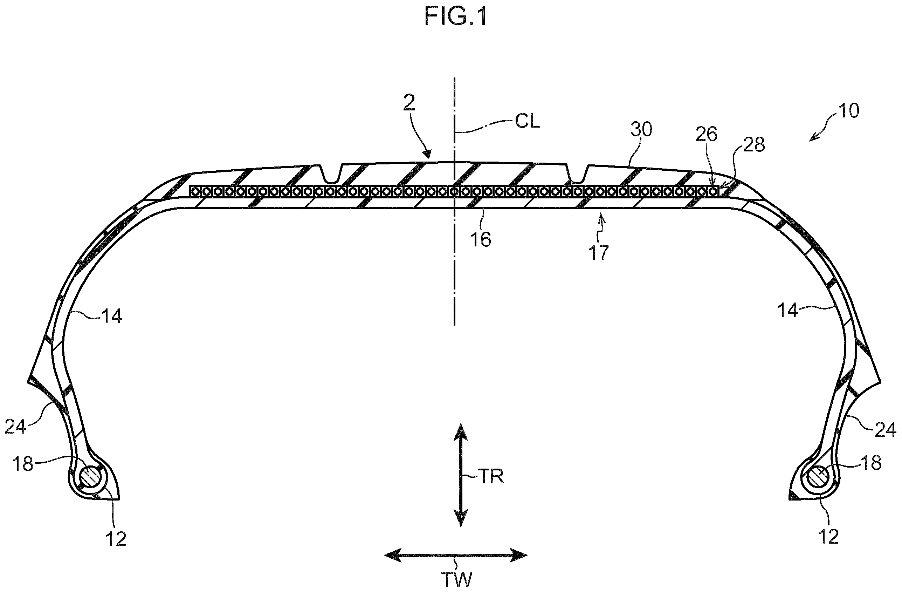

As illustrated in Fig. 1, a tire 10 of the first exemplary embodiment is a pneumatic tire used by filling the interior thereof with air, and exhibits a cross-section profile substantially the same as that of ordinary rubber-made pneumatic tires hitherto.

The tire 10 of the present exemplary embodiment includes a tire frame member 17 serving as a frame portion of the tire 10. The tire frame member 17 is configured by forming a frame-resin material into a circular shape. The tire frame member 17 is configured including a pair of bead portions 12 disposed separated from each other in the tire width direction, side portions 14 respectively continuing from the tire radial direction outer side of the bead portions 12, and a crown portion 16 continuing from the tire width direction inner side of the side portions 14 and joining the respective tire radial direction outer side ends of the side portions 14 together.

The circumferential direction, width direction, and radial direction of the tire frame member 17 respectively correspond to the tire circumferential direction, the tire width direction, and the tire radial direction.

The tire frame member 17 is formed by employing the frame-resin material as a main raw material. The frame-resin material does not encompass vulcanized rubber. Examples of the frame-resin material include thermoplastic resins (including thermoplastic elastomers), thermoset resins, and other general-purpose resins, as well as engineering plastics (including super engineering plastics) and the like.

Thermoplastic resins (including thermoplastic elastomers) are polymer compounds of materials that soften and flow with increased temperature, and that adopt a relatively hard and strong state when cooled. In the present specification, out of these, distinction is made between thermoplastic elastomers, these being polymer compounds that soften and flow with increasing temperature, that adopt a relatively hard and strong state on cooling, and that have a rubber-like elasticity, and non-elastomer thermoplastic resins, these being polymer compounds that soften and flow with increasing temperature, that adopt a relatively hard and strong state on cooling, and do not have a rubber-like elasticity.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Such thermoplastic resin materials have, for example, a deflection temperature under load (when loaded at 0.45 MPa), as defined by ISO 75-2 or ASTM D648, of 78°C or greater, a tensile yield strength, as defined by JIS K7161, of 10 MPa or greater, and a tensile elongation at break, also as defined by JIS K7161, of 50% or greater. Materials with a Vicat softening temperature, as defined in JIS K7206 (method A), of 130°C may be employed.

Thermoset resins are curable polymer compounds that form a three dimensional mesh structure with increasing temperature. Examples of thermoset resins include phenolic resins, epoxy resins, melamine resins, and urea resins.

As the frame-resin material, in addition to the above thermoplastic resins (including thermoplastic elastomers) and thermoset resins, general-purpose resins may also be employed, such as meth(acrylic)-based resins, EVA resins, vinyl chloride resins, fluororesins, and silicone-based resins.

The tire frame member 17 may have a single frame-resin material component, or may employ frame-resin material components having different characteristics from each other in each of the locations of the tire frame member 17 (the bead portions 12, the side portions 14, the crown portion 16, etc.). In the present exemplary embodiment, the tire frame member 17 is formed from a thermoplastic resin.

As illustrated in Fig. 1, the bead portions 12 are locations to be fitted onto a standard rim (not illustrated in the drawings) with a covering rubber 24 interposed therebetween, and annular bead cores 18 extending along the tire circumferential direction are embedded inside the bead portions 12. The bead cores 18 are configured from bead cords (not illustrated in the drawings) such as metal cords (for example steel cords), organic fiber cords, resin coated organic fiber cords, or a hard resin. The bead cores 18 may be omitted if sufficient rigidity of the bead portions 12 can be secured.

The side portions 14 are locations configuring portions at the side of the tire 10, and are formed so as to gently curve from the bead portions 12 toward the crown portion 16 so as to protrude toward the tire width direction outer side.

The crown portion 16 is a location supporting a tread 30, described later, disposed at the tire radial direction outer side thereof, and has an outer circumferential surface formed with a substantially flat profile along the tire width direction.

A belt layer 28 is disposed at the tire radial direction outer side of the crown portion 16. The belt layer 28 is formed from a covered cord member 26 wound along the tire circumferential direction in a spiral shape. Details regarding the covered cord member 26 are given later.

The tread 30 is disposed at the tire radial direction outer side of the belt layer 28. The tread 30 covers the belt layer 28. A tread pattern (not illustrated in the drawings) is formed in a ground contact surface of the tread 30 that contacts the road surface.

The covering rubber 24 is disposed on the tire frame member 17 so as to span from outer surfaces of the side portions 14 to inner surfaces of the bead portions 12. A rubber material having a higher weather resistance and better sealing properties to a standard rim than the tire frame member 17 may be employed as the rubber material component of the covering rubber 24. Note that in the present exemplary embodiment, the outer surface of the tire frame member 17 is entirely covered by the tread 30 and the covering rubber 24.

Next, detailed explanation follows regarding the covered cord member 26.

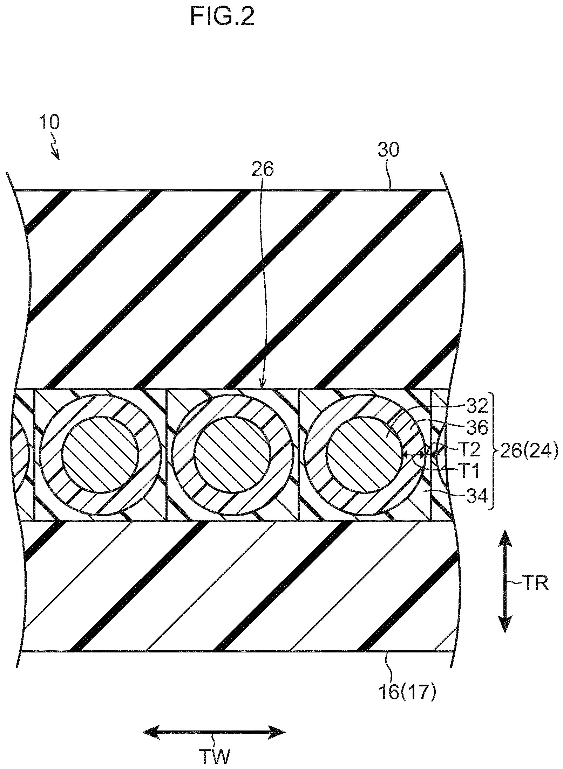

As illustrated in Fig. 2, the covered cord member 26 includes a reinforcing cord 32 extending along the tire circumferential direction, a covering-resin layer 34 covering the reinforcing cord 32, and a bonding-resin layer 36 disposed between the reinforcing cord 32 and the covering-resin layer 34 and bonding (adhering) the reinforcing cord 32 and the covering-resin layer 34 together.

The reinforcing cord 32 is configured either from a monofilament (single strand) such as a metal fiber or an organic fiber, or from a multifilament (twisted strand) of such fibers twisted together. In the present exemplary embodiment the reinforcing cord 32 is configured by metal cord of metal fibers twisted together.

The covering-resin layer 34 is formed from a covering-resin material. Examples of materials that may be employed as the covering-resin material are similar to or the same as those of the frame-resin material for forming the tire frame member 17. In the present exemplary embodiment, a thermoplastic resin is employed as the covering-resin material, and the covering-resin layer 34 is bonded to the crown portion 16 by thermal welding.

In the present exemplary embodiment, in order to bond the covering-resin layer 34 and the crown portion 16 together by thermal welding, preferably the same resin material is employed for the covering-resin material and the frame-resin material from the perspective of bonding strength. Note that the present invention is not limited to such a configuration, and the covering-resin material and the frame-resin material may be different resin materials.

The covering-resin layer 34 has a cross-section profile that is substantially square shaped.

The bonding-resin layer 36 is formed from a bonding-resin material having a higher elastic modulus than the covering-resin material, and having excellent adhesive properties with respect to the reinforcing cord 32. Reference here to the "elastic modulus" means the tensile elastic modulus as defined in JIS K7161. The elastic modulus of the bonding-resin layer 36 is preferably set to from one to five times the elastic modulus of the covering-resin layer 34.

Examples of the bonding-resin material include materials having main components (main agents) of one or two or more thermoplastic resins out of a modified olefin-based resin (such as a modified polyethylene-based resin and a modified polypropylene-based resin), a polyamide-based resin, a polyurethane-based resin, a polyester-based resin, a copolymer of ethylene and ethyl acrylate, a copolymer of ethylene and vinyl acetate, or the like. From among these, from the perspective of adhesive properties between the reinforcing cord 32 member and the covering resin layer 34, a hot melt adhesive including at least one species selected from a modified olefin-based resin, a polyester-based resin, a copolymer of ethylene and ethyl acrylate, or a copolymer of ethylene and vinyl acetate is preferable, and a modified olefin-based resin (acid-modified olefin-based resin) that has been acid-modified by unsaturated carboxylic acid is more preferable.

Reference here to "modified olefin-based resin that has been acid-modified by unsaturated carboxylic acid" means a modified olefin-based resin resulting from graft copolymerization with unsaturated carboxylic acid.

An olefin-based thermoplastic elastomer thereof preferably has an elastic modulus of from 140 MPa to 950 MPa.

A layer thickness T1 of the bonding-resin layer 36 is thicker (greater than) a layer thickness T2 of the covering-resin layer 34. Reference here to the "layer thickness" means the thickness of the thinnest portion for thicknesses measured along a radial direction of the reinforcing cord 32 radiating out from the center of the reinforcing cord 32.

In the present exemplary embodiment, the layer thickness T1 of the bonding-resin layer 36 is set within a range of from 500 µm to 5 mm.

As illustrated in Fig. 1 and Fig. 2, the covered cord member 26 is wound along the tire circumferential direction around the outer circumference of the crown portion 16, and bonded thereto by thermal welding.

The covered cord member 26 is wound onto the outer circumference of the crown portion 16 with no gaps along the tire width direction, and portions of the covered cord member 26 adjacent to each other in the tire width direction are bonded to each other by thermal welding.

Next, explanation follows regarding an example of a method for manufacturing the tire 10 of the present exemplary embodiment.

First, explanation will be given regarding a frame forming process.

In the frame forming process, a pair of tire frame half parts (not illustrated in the drawings) of the tire frame member 17 divided in half are formed by injection molding the frame-resin material. The injection molding of the tire frame half parts is performed in a state in which pre-formed bead cores 18 are placed in predetermined positions inside a mold. The bead cores 18 are accordingly embedded in the bead portions 12 of the molded tire frame half parts.

Next, the tire frame member 17 is formed by bonding together the pair of tire frame half parts using thermal welding.

Then non-vulcanized covering rubber that will become the covering rubber 24 is affixed to the tire frame member 17 so as to span from the outer surfaces of the side portions 14 to the inner surfaces of the bead portions 12. The tire frame member 17 is thereby formed affixed with the non-vulcanized covering rubber.

Note that although in the present exemplary embodiment a pair of tire frame half parts are formed, and the pair of tire frame half parts are bonded together to form the tire frame member, the present invention is not limited thereto. For example, the tire frame member 17 may be formed by dividing the tire frame member 17 into three or more parts, and bonding the divided parts together to form the tire frame member 17. The tire frame member 17 may also be formed without being divided.

Next, explanation follows regarding a covered cord member molding process.

In the covered cord member molding process, first the reinforcing cord 32 is covered by the bonding-resin material that is in a molten state, and then the covering-resin material in a molten state is covered thereon prior to the bonding-resin material solidifying. When the bonding-resin material and the covering-resin material have been cooled and solidified, the covered cord member 26 is formed with the bonding-resin layer 36 and the covering-resin layer 34 respectively formed at the outer periphery of the reinforcing cord 32.

Note that the covered cord member molding process is not limited to the above configuration, and may be configured such that the covering-resin material in a molten state covers the bonding-resin material covering the reinforcing cord 32 after the bonding-resin material has been cooled and solidified.

The respective profiles of the covering-resin layer 34 and the bonding-resin layer 36 can be changed by changing the profiles of extrusion ports of an extruder, not illustrated in the drawings. Similarly, the respective layer thicknesses of the covering-resin layer 34 and the bonding-resin layer 36 may be adjusted by changing the opening amount of the extrusion ports of the extruder.

In the present exemplary embodiment, the opening amount of the extrusion ports of the non-illustrated extruder are varied such that layer thickness T1 of the bonding-resin layer 36 is thicker (greater) than the layer thickness T2 of the covering-resin layer 34.

Next, explanation follows regarding a belt molding process. In the belt molding process, the belt layer 28 is formed at the outer circumference of the tire frame member 17. Specifically, the belt layer 28 is formed by winding the covered cord member 26 in a spiral shape on the crown portion 16 of the tire frame member 17. The reinforcing cord 32 is wound onto the crown portion 16 while a portion of the covering-resin layer 34 that makes contact with the outer surface of the crown portion 16 is being melted. The reinforcing cord 32 is accordingly strongly bonded by thermal welding to the crown portion 16 after the covering-resin material has cooled and solidified.

Next, explanation follows regarding a tread placement process. In the tread placement process, non-vulcanized tread rubber (not illustrated in the drawings) that will become the tread 30 is placed at the tire radial direction outer side of the belt layer 28. Specifically, belt-shaped non-vulcanized tread rubber corresponding to one circumference of the tire is wrapped on the outer circumference of the tire frame member 17, and adhered to the outer circumferential surfaces of the belt layer 28 and the tire frame member 17 using an adhesive.

Next, explanation follows regarding a vulcanization process. In the vulcanization process, the non-vulcanized tread rubber adhered to the tire frame member 17 and the non-vulcanized covering rubber are vulcanized. Specifically, the tire frame member 17 is set in a vulcanizer, and the non-vulcanized tread rubber and the non-vulcanized covering rubber are heated to a predetermined temperature for a predetermined time and vulcanized. The non-vulcanized covering rubber and the non-vulcanized tread are thereby vulcanized to the degree of vulcanization of a finished product.

Next, the vulcanized tire 10 is taken out of the vulcanizer. This thereby completes the tire 10.

Note that the sequence of each process in the manufacturing method of the tire according to the present exemplary embodiment may be changed as appropriate. For example, prior to affixing the non-vulcanized covering rubber to the tire frame member 17, the belt layer 28 may be disposed on the crown portion 16 of the tire frame member 17 and the non-vulcanized tread 30 may then be placed on the belt layer 28. Moreover, configuration may be made such that the non-vulcanized covering rubber is affixed to a pair of tire half parts prior to the tire half parts being bonded together.

Next, explanation follows regarding operation and advantageous effects of the tire 10 of the present exemplary embodiment.

In the tire 10, due to the layer thickness T1 of the bonding-resin layer 36 being thicker than the layer thickness T2 of the covering-resin layer 34, the bonding-resin layer 36 is harder than, for example, cases in which the layer thickness T1 is the layer thickness T2 or less. Accordingly, for example, even when external damage that has occurred to the tread 30 reaches the covering-resin layer 34 and damage arises in the covering-resin layer 34 as a result, the speed of progress of the damage is suppressed by the bonding-resin layer 36. Specifically, since the bonding-resin layer 36 is formed of a bonding-resin material with a higher elastic modulus than the covering-resin material, the speed of progress of damage can be made slower than in the covering-resin layer 34. Thus, by making the layer thickness T1 of the bonding-resin layer 36 thicker than the layer thickness T2 of the covering-resin layer 34, the speed damage occurring in the covering-resin layer 34 progresses as far as the reinforcing cord 32 can be suppressed.

The elastic modulus of the covering-resin material being lower than the elastic modulus of the bonding-resin material enables mitigation of an elastic modulus difference (step in rigidity) between the reinforcing cord 32, which is a metal cord, and the crown portion 16, enabling delamination or the like between the reinforcing cord 32 and the covering-resin layer 34 to be suppressed from occurring.

Moreover, in the tire 10, the bonding-resin layer 36 is made even harder due to the layer thickness T1 of the bonding-resin layer 36 being set within the range of from 500 µm to 5 mm. This accordingly enables the speed at which damage progresses in the bonding-resin layer 36 to be suppressed (slowed). Note that in cases in which the layer thickness T1 is less than 500 µm the layer thickness of the bonding-resin layer 36 is insufficient, and there is a concern that it may not be possible to secure a sufficient advantageous effect of suppressing the speed at which damage progresses in the bonding-resin layer 36. On the other hand, in cases in which the layer thickness T1 is 5 mm or greater, the bonding-resin layer 36 becomes too hard, and there is a concern that delamination between the reinforcing cord 32 and the covering-resin layer 34 becomes more liable to occur. The layer thickness T1 of the bonding-resin layer 36 is accordingly preferably set within the range of from 500 µm to 5 mm.

Moreover, due to the covered cord member 26 being wound on the outer circumference of the crown portion 16 of the tire frame member 17 in a spiral shape, the tire circumferential direction rigidity of the crown portion 16 is raised. Moreover, radial stretch of the crown portion 16 (a phenomenon in which the crown portion 16 bulges out in the radial direction) during tire roll is suppressed by the hoop effect of the belt layer 28 formed by the covered cord member 26.

Furthermore, in the tire 10, due to bonding the covering-resin layer 34 of the covered cord member 26 and the crown portion 16 of the tire frame member 17 together using thermal welding, the bond strength is raised between the covering-resin layer 34 and the crown portion 16. The tire circumferential direction rigidity of the crown portion 16 is thereby further raised.

In the tire 10 of the first exemplary embodiment, a configuration is adopted in which the single covered cord member 26 is wound along the tire circumferential direction in a spiral shape on the outer circumference of the crown portion 16, and bonded thereto. However, the present invention is not limited to such a configuration. A configuration may be adopted in which a belt shaped body including plural of the covered cord members 26 lying side-by-side in a belt shape is wound along the tire circumferential direction in a spiral shape on the outer circumference of the crown portion 16, and bonded thereto.

In the first exemplary embodiment, the outer circumferential surface of the crown portion 16 has a flat profile in tire width direction cross-section; however, the present invention is not limited to such a configuration and the outer circumferential surface may have a non-flat profile in tire width direction cross-section. For example, the outer circumferential surface of the crown portion 16 may have a curved profile (circular arc profile) that bulges toward the tire radial direction outer side in tire width direction cross-section.

In the manufacturing method of the tire 10 of the first exemplary embodiment, a configuration is adopted in which the crown portion 16 and the covered cord member 26 are bonded together by thermal welding with the covering-resin layer 34 of the covered cord members 26 in a molten state; however, the present invention is not limited to such a configuration. For example, a configuration may be adopted in which the crown portion 16 and the covered cord member 26 are bonded together by thermal welding with the outer circumferential surface of the crown portion 16 in a molten state, or a configuration may be adopted in which the crown portion 16 and the covered cord member 26 are bonded together by thermal welding with both the covering-resin layer 34 of the covered cord member 26 and the outer circumferential surface of the crown portion 16 in a molten state.

### Second Exemplary Embodiment

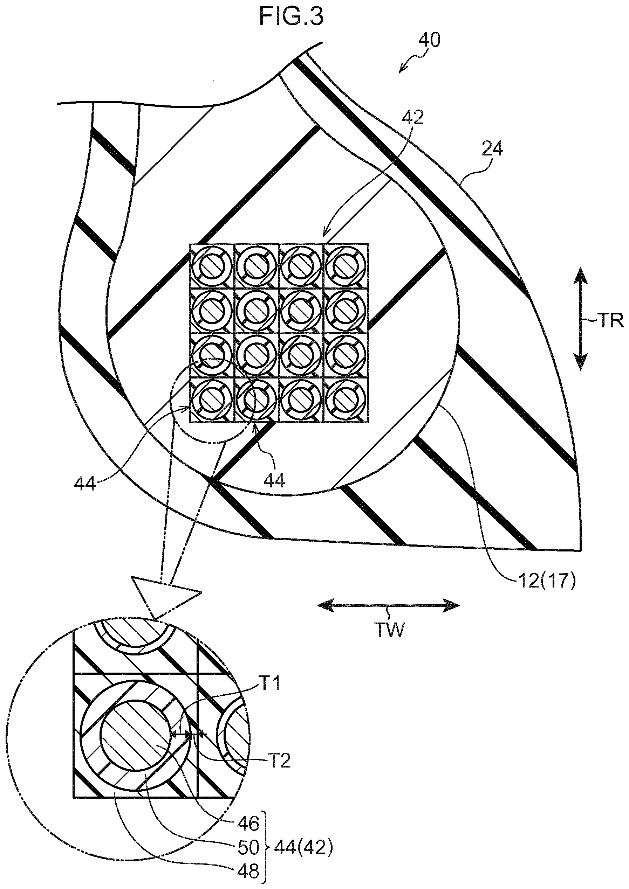

Next, explanation follows regarding a tire of a second exemplary embodiment, which is not an embodiment of the present invention, with reference to Fig. 3. Note that configuration similar to that of the first exemplary embodiment is appended with the same reference signs, and explanation thereof is omitted as appropriate.

As illustrated in Fig. 3, a tire 40 has the same configuration as the tire 10 of the first exemplary embodiment, except in the point that a covered cord member 44 is wound so as to configure a bead core 42.

The bead core 42 is formed by winding the single covered cord member 44 along the tire circumferential direction so as to be arranged into plural rows and plural columns (four rows and four columns in the present exemplary embodiment).

The covered cord member 44 includes a reinforcing cord 46 extending along the tire circumferential direction, a covering-resin layer 48 covering the reinforcing cord 46, and a bonding-resin layer 50 interposed between the reinforcing cord 46 and the covering-resin layer 48 and bonding (adhering) the reinforcing cord 46 and the covering-resin layer 48 together. As a material component of the reinforcing cord 46 of the present exemplary embodiment, similar or the same materials may be employed to the component materials of the reinforcing cord 32 of the first exemplary embodiment. As the covering-resin material component of the covering-resin layer 48 of the present exemplary embodiment, similar or the same materials may be employed to the covering-resin material component of the covering-resin layer 34. As the bonding-resin material component of the bonding-resin layer 50 of the present exemplary embodiment, similar or the same materials may be employed to the bonding-resin material component of the bonding-resin layer 36.

A layer thickness T1 of the bonding-resin layer 50 is thicker than a layer thickness T2 of the covering-resin layer 48.

Portions of the covered cord member 44 that are adjacent to each other in at least one of the tire width direction or the tire radial direction are bonded together by thermal welding. The covering-resin layer 48 of the covered cord member 44 configuring outer peripheral portions of each bead core 42 is bonded to the bead portion 12 by thermal welding. Specifically, in a tire frame molding process, due to performing injection molding in a state in which a pre-formed bead core 42 is disposed inside a mold, inside the mold, the frame-resin material and the covering-resin layer 48 configuring the outer peripheral portions of the bead core 42 are bonded together by thermal welding.

Next, explanation follows regarding operation and advantageous effects of the tire 40 of the present exemplary embodiment. Explanation is omitted of operation and advantageous effects obtained by configuration similar to that of the tire 10 of the first exemplary embodiment.

In the tire 40, due to the layer thickness T1 of the bonding-resin layer 50 being thicker than the layer thickness T2 of the covering-resin layer 48, the bonding-resin layer 50 is harder than, for example, cases in which the layer thickness T1 is the layer thickness T2 or less. Accordingly, for example, even when external damage that has occurred to the covering rubber 24 reaches the covering-resin layer 48 and damage arises in the covering-resin layer 48 as a result, the speed of progress of the damage is suppressed by the bonding-resin layer 50. Specifically, since the bonding-resin layer 50 is formed of a bonding-resin material with a higher elastic modulus than the covering-resin material, the speed of progress of damage can be made slower than in the covering-resin layer 48. Thus, by making the layer thickness T1 of the bonding-resin layer 50 thicker than the layer thickness T2 of the covering-resin layer 48, the speed damage occurring in the covering-resin layer 48 progresses as far as the reinforcing cord 46 can be suppressed.

Moreover, the elastic modulus of the covering-resin material being lower than the elastic modulus of the bonding-resin material enables mitigation of an elastic modulus difference (step in rigidity) between the reinforcing cord 46, which is a metal cord, and the bead portions 12, enabling delamination or the like between the reinforcing cord 46 and the covering-resin layer 48 to be suppressed from occurring.

Moreover, in the tire 40, the bonding-resin layer 50 is made even harder due to the layer thickness T1 of the bonding-resin layer 50 being set within the range of from 500 µm to 5 mm. This accordingly enables the speed at which damage progresses in the bonding-resin layer 50 to be suppressed (slowed). Note that in cases in which the layer thickness T1 is less than 500 µm, the layer thickness of the bonding-resin layer 50 is insufficient, and there is a concern that it may not be possible to secure a sufficient advantageous effect of suppressing the speed at which damage progresses in the bonding-resin layer 50. On the other hand, in cases in which the layer thickness T1 is 5 mm or greater, the bonding-resin layer 50 becomes too hard, and there is a concern that delamination between the reinforcing cord 46 and the covering-resin layer 48 becomes more liable to occur. The layer thickness T1 of the bonding-resin layer 50 is accordingly preferably set within the range of from 500 µm to 5 mm.

Furthermore, in the tire 40, due to embedding the bead core 42 formed by the covered cord member 44 inside the bead portions 12 and bonding thereto using thermal welding, the circumferential direction rigidity of the bead portions 12 of the tire frame member 17 is raised.

Furthermore, in the tire 40, due to bonding the covering-resin layer 48 of the covered cord member 44 and the bead portion 12 of the tire frame member 17 together by thermal welding, the bond strength between the covering-resin layer 48 and the bead portion 12 is raised. The tire circumferential direction rigidity of the bead portions 12 is thereby further raised.

In the tire 40 of the second exemplary embodiment, the bead core 42 is configured by winding the single covered cord member 44 along the tire circumferential direction so as to form plural rows and plural columns; however, the present invention is not limited to such a configuration. The bead core 42 may be formed by winding a belt shaped body including plural of the covered cord members 44 lying side-by-side in a belt shape plural times along the tire circumferential direction.

In the tire 40 of the second exemplary embodiment, the belt layer 28 is formed by the covered cord member 26, and the bead core 42 is formed by the covered cord member 44; however, the present invention is not limited to such a configuration. As other exemplary embodiments, configuration may be made in which while the bead core 42 is still formed with the covered cord member 44, a belt layer is formed by rubber covered reinforcing cord, a belt layer is formed by winding non-covered reinforcing cord while embedding (including partially embedding) the non-covered reinforcing cord in the outer circumference of the crown portion 16.

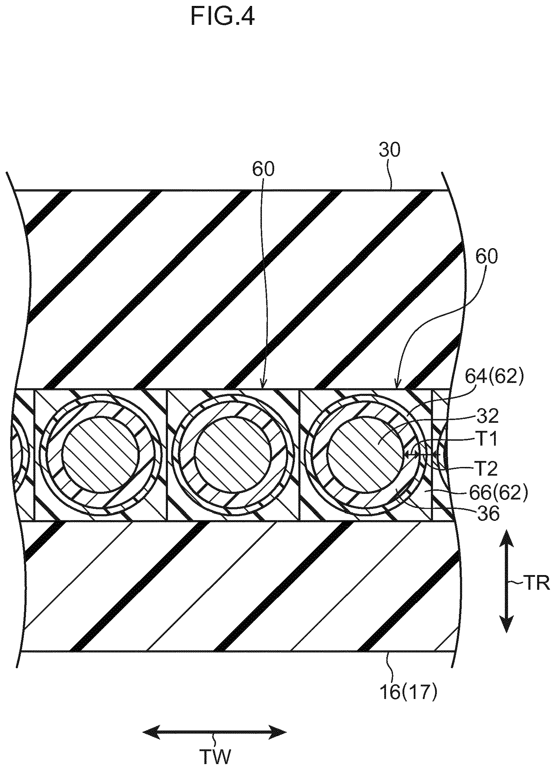

In the first exemplary embodiment, the covering-resin layer 34 of the covered cord member 26 has a single covering-resin material component; however, the present invention is not limited to such a configuration. For example, the covering-resin layer 34 of the covered cord member 26 may have plural covering-resin material components having different elastic moduli. Specifically, as in a covered cord member 60 illustrated in Fig. 4, a covering-resin layer 62 may be multi-layered, with covering-resin materials having different elastic moduli used to form each of the layers of the covering-resin layer 62. In such a configuration, interlayer delamination due to a difference between elastic moduli can be suppressed by making an elastic modulus for an outer resin layer 66 lower than that of an inner resin layer 64 of the covering-resin layer 62. The durability of the tire can be improved as a result. Such a multi-layer configuration for the covering-resin layer 62 of the covered cord member 60 may also be applied to the covering-resin layer 48 of the covered cord member 44 of the second exemplary embodiment.

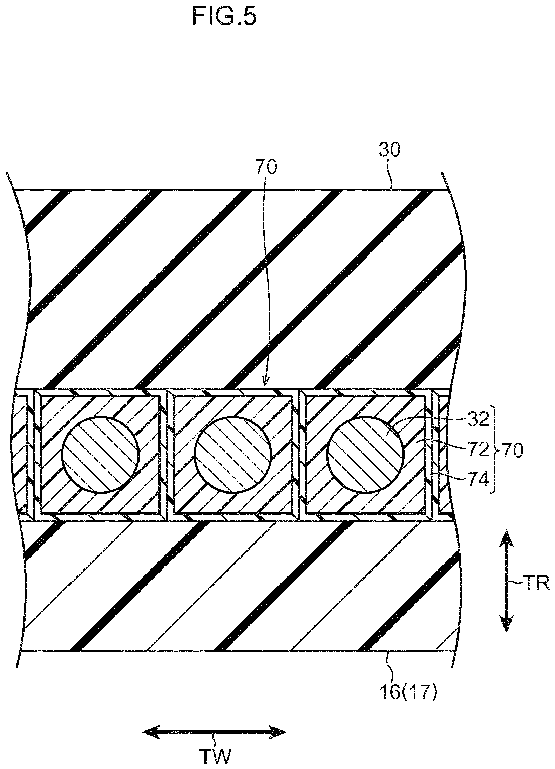

In the first exemplary embodiment, the bonding-resin layer 36 of the covered cord member 26 is configured with a circular cross-section profile as illustrated in Fig. 2, and the outer circumference thereof is configured covered by the covering-resin layer 34 with a substantially square cross-section profile; however, the present invention is not limited to such a configuration. For example, as in a covered cord member 70 illustrated in Fig. 5, configuration may be such that a bonding-resin layer 72 is configured with a substantially square cross-section profile, and the outer periphery thereof is configured covered by a covering-resin layer 74 with a substantially square cross-section profile. Note that configuration in which the bonding-resin layer 72 of the covered cord member 70 and the covering-resin layer 74 each have substantially square cross-section profiles may also be applied to the covering-resin layer 48 of the covered cord member 44 of the second exemplary embodiment.

Embodiments of the present invention have been explained above by way of exemplary embodiments; however, these are merely exemplary embodiments, and obviously various modifications may be implemented, and the sequence of manufacturing processes changed as appropriate, within a scope of not departing from the scope of the present invention. Obviously, the scope of rights of the present invention is not limited to these exemplary embodiments, but by the appended claims.

## Claims

1. A tire (10) comprising:
a circular tire frame member (17) formed from a frame-resin material; and
a covered cord member (26, 60, 70) including
a reinforcing cord (32) provided in the tire frame member (17) and extending along a tire circumferential direction (TC),
a covering-resin layer (34, 62, 74) formed from a covering-resin material, covering the reinforcing cord (32), and bonded to the tire frame member (17), and
a bonding-resin layer (36, 72) formed from a bonding-resin material and interposed between the reinforcing cord (32) and the covering-resin layer (34, 62, 74), bonding the reinforcing cord (32) and the covering-resin layer (34, 62, 74) together, and having a layer thickness thicker than that of the covering-resin layer (34, 62, 74), the layer thickness being the thickness of the thinnest portion measured along a radial direction of the reinforcing cord (32) radiating out from the center of the reinforcing cord (32), wherein:
the tire frame member (17) includes
a bead portion (12),
a side portion (14) continuing from a tire radial direction outer side of the bead portion (12), and
a crown portion (16) continuing from a tire width direction inner side of the side portion (14);
**characterized in that**
a tensile elastic modulus of the bonding-resin material is higher than that of the covering resin material;
the covered cord member (26, 60, 70) has a cross-section profile along a tire width direction (TW) that is substantially square shaped; and
the covered cord member (26, 60, 70) is wound in a spiral shape around an outer circumference of the crown portion (16), and portions of the covered cord member (26, 60, 70) adjacent to each other in the tire width direction (TW) are bonded to each other by thermal welding.

2. The tire (10) of claim 1, wherein:
the covering-resin material has thermoplastic properties; and
the covering-resin layer (34, 62, 74) and the crown portion (16) are bonded together by thermal welding.

3. The tire (10) of claim 1 or claim 2, wherein a layer thickness of the bonding-resin layer (36, 62, 74) is from 500 µm to 5 mm.

## Patentansprüche

1. Reifen (10), umfassend:
ein kreisförmiges Reifenrahmenelement (17), das aus einem Rahmenharzmaterial gebildet ist; und
ein umhülltes Kordelement (26, 60, 70), das Folgendes einschließt:
einen Verstärkungskord (32), der in dem Reifenrahmenelement (17) bereitgestellt ist und sich entlang einer Reifenumfangsrichtung (TC) erstreckt;
eine Deckharzschicht (34, 62, 74), die aus einem Deckharzmaterial gebildet ist, den Verstärkungskord (32) bedeckt und mit dem Reifenrahmenelement (17) verbunden ist, und
eine Bindeharzschicht (36, 72), die aus einem Bindeharzmaterial gebildet und zwischen dem Verstärkungskord (32) und der Deckharzschicht (34, 62, 74) angeordnet ist, den Verstärkungskord (32) und die Deckharzschicht (34, 62, 74) miteinander verbindet und die eine Schichtdicke aufweist, die dicker ist als die der Deckharzschicht (34, 62, 74), wobei die Schichtdicke die Dicke des dünnsten Abschnitts ist, gemessen entlang einer radialen Richtung des Verstärkungskords (32), von der Mitte des Verstärkungskords (32) aus ausstrahlend, wobei:
das Reifenrahmenelement (17) Folgendes einschließt:
einen Wulstabschnitt (12),
einen Seitenabschnitt (14), der sich von einer Reifenradialrichtungsaußenseite des Wulstabschnitts (12) erstreckt, und
einen Kronenabschnitt (16), der sich von einer Reifenbreitenrichtungsinnenseite des Seitenabschnitts (14) erstreckt;
**dadurch gekennzeichnet, dass**
ein Zugelastizitätsmodul des Bindeharzmaterials höher ist als das des Deckharzmaterials;
das umhüllte Kordelement (26, 60, 70) ein Querschnittsprofil entlang einer Reifenbreitenrichtung (TW) hat, das im Wesentlichen quadratisch ist; und
das umhüllte Kordelement (26, 60, 70) spiralförmig um einen Außenumfang des Kronenabschnitts (16) gewickelt ist und Abschnitte des umhüllten Kordelements (26, 60, 70) benachbart zueinander in der Reifenbreitenrichtung (TW) durch thermisches Schweißen miteinander verbunden sind.

2. Reifen (10) nach Anspruch 1, wobei:
das Deckharzmaterial thermoplastische Eigenschaften hat; und
die Deckharzschicht (34, 62, 74) und der Kronenabschnitt (16) durch thermisches Schweißen miteinander verbunden sind.

3. Reifen (10) nach Anspruch 1 oder Anspruch 2, wobei eine Schichtdicke der Bindeharzschicht (36, 62, 74) 500 µm bis 5 mm beträgt.

## Revendications

1. Bandage pneumatique (10) comprenant :
un élément d'armature de pneumatique circulaire (17) formé à partir d'un matériau d'armature de résine ; et
un élément de câble recouvert (26, 60, 70) incluant
un câble de renforcement (32) fourni dans l'élément d'armature de pneumatique (17) et s'étendant le long d'une direction circonférentielle du bandage pneumatique (TC),
une couche de résine de couverture (34, 62, 74) formée à partir d'un matériau de résine de couverture, couvrant le câble de renforcement (32), et reliée à l'élément d'armature de pneumatique (17), et
une couche de résine liante (36, 72) formée à partir d'un matériau de résine liant et interposée entre le câble de renforcement (32) et la couche de résine de couverture (34, 62, 74), reliant ensemble le câble de renforcement (32) et la couche de résine de couverture (34, 62, 74), et présentant une épaisseur de couche plus épaisse que celle de la couche de résine de couverture (34, 62, 74), l'épaisseur de couche étant l'épaisseur de la partie la plus mince mesurée le long d'une direction radiale du câble de renforcement (32) rayonnant vers l'extérieur depuis le centre du câble de renforcement (32), dans lequel :
l'élément d'armature pneumatique (17) inclut
une partie de talon (12),
une partie latérale (14) s'étendant depuis un côté extérieur dans la direction radiale du bandage pneumatique de la partie de talon (12) ; et
une partie sommet (16) s'étendant depuis un côté intérieur dans la direction de la largeur du bandage pneumatique de la partie latérale (14) ;
**caractérisé en ce que**
un module d'élasticité en traction du matériau de résine liant est supérieur à celui du matériau de résine de couverture ;
l'élément de câble recouvert (26, 60, 70) a un profil transversal le long d'une direction de la largeur du bandage pneumatique (TW) étant substantiellement de forme carrée ; et
l'élément de câble recouvert (26, 60, 70) est enroulé dans une forme en spirale autour d'une circonférence externe de la partie sommet (16), et les parties de l'élément de câble recouvert (26, 60, 70) adjacentes les unes aux autres dans la direction de la largeur du bandage pneumatique (TW) sont reliées les unes aux autres par soudure thermique.

2. Bandage pneumatique (10) selon la revendication 1, dans lequel :
le matériau de résine de couverture possède des propriétés thermoplastiques ; et
la couche de résine de couverture (34, 62, 74) et la partie sommet (16) sont reliées conjointement par soudage thermique.

3. Bandage pneumatique (10) selon la revendication 1 ou la revendication 2, dans lequel une épaisseur de couche de la couche de résine liante (36, 62, 74) se situe entre 500 µm et 5 mm.
